# EUROPEAN PATENT APPLICATION

(11) **EP 4 730 530 A1**
(43) Date of publication of application: **22.04.2026**
(21) Application number: 25745292.0
(22) Date of filing: 22.01.2025
(51) Int. Cl.: H01M 50/317, H01M 50/249

(54) **VENTING DEVICE, AND BATTERY PACK AND VEHICLE INCLUDING SAME**

(30) Priority: 25.01.2024 KR 20240011652
(71) Applicant: LG Energy Solution, Ltd., Seoul 07335 (KR)
(72) Inventor: CHOI, Jinyoung, Daejeon 34122 (KR); KIM, Kyungwoo, Daejeon 34122 (KR); BAEK, Yunseon, Daejeon 34122 (KR); HWANG, Ji Soo, Daejeon 34122 (KR)
(74) Representative: Plasseraud IP
(86) International application number: PCT/KR2025/099132
(87) International publication number: WO 2025/159627

(57) **Abstract**

A venting device according to the present invention may comprise: a fixed member installed in an opening of a frame on which a battery cell is mounted; a movable member that opens and closes the opening of the frame as at least a portion thereof moves within the fixed member; a blocking member provided on the fixed member to block at least one region of the opening of the frame; and a protruding part provided on the moving member to pass through the opening region of the blocking member.

## Description

### Technical Field

The present disclosure relates to a venting device and relates to a battery pack and a vehicle which include the same.

### Background Art

As a demand for a portable electronic device such as a notebook computer, a video camera, and a cellphone is rapidly increased, and as a robot, an electric vehicle, or the like is greatly commercialized, researches on a repeatedly rechargeable and dischargeable secondary battery is actively conducted currently.

A currently commercialized secondary battery includes a nickel-cadmium battery, a nickel-hydrogen battery, a nickel-zinc battery, a lithium secondary battery, or the like. Among the above-mentioned batteries, compared to a nickel-based secondary battery, the lithium secondary battery is spotlighted because a memory effect, in which a rechargeable capacity of a battery is decreased in a state in which the battery is not completely discharged, hardly occurs therein, a self-discharge rate thereof is greatly low, an energy density thereof is high.

The lithium secondary battery mainly uses a lithium-based oxide and a carbon material as a positive electrode active material and a negative electrode active material, respectively. The lithium secondary battery may include an electrode assembly in which a positive electrode plate and a negative electrode plate to which the positive electrode active material and the negative electrode active material are respectively applied are disposed with a separator in between and may include an exterior material, namely a battery case, which seals and receives the electrode assembly with an electrolyte.

Generally, the lithium secondary battery may be classified into a can-type secondary battery in which the electrode assembly is embedded in a metallic can and a pouch-type secondary battery in which the electrode assembly is embedded in a pouch of an aluminum laminate sheet depending on a shape of the exterior material.

Recently, a secondary battery is widely used for operational use or energy storage use in a medium or large device such as the electric vehicle or an energy storage system (ESS), as well as a small device such as the portable electronic device. Such a secondary battery may form one battery module in a form in which multiple secondary batteries are received together in a module case while being electrically connected. Such battery modules may be also electrically connected in a narrow space in order to increase energy density and may form a battery pack.

However, when being present in a state of being concentrated as such, multiple battery modules or battery cells may be vulnerable to an accident such as fire or explosion. Thus, an existing battery pack has included a venting device in order to discharge a gas when an event such as thermal runaway occurs in the battery pack.

The venting device includes a blocking member for discharging the gas exclusively and preventing emission of a flame. However, a pressure inside the battery pack has been excessively increased because the blocking member has been blocked by dust or a residual substance generated at a time of the event such as the thermal runaway, so that the battery pack may have caught fire or exploded. Thus, development of a venting device having a new structure is required for a solution therefor.

### Detailed Description of the Invention

### Technical Goals

An aspect provides a venting device configured to prevent a gas discharge path from being blocked by dust, a residual substance, and the like.

### Technical solutions

According to an aspect, there is provided a venting device installed to an opening portion of a frame to which a battery cell is mounted, the venting device including a fixation member installed to the opening portion of the frame, a moving member configured to open and close the opening portion of the frame by moving at least a portion of the moving member within the fixation member, a blocking member provided to the fixation member and configured to block at least one area of the opening portion of the frame, and a protrusion part provided to the moving member and configured to penetrate an opening area of the blocking member.

The blocking member may be positioned at a side inward from the moving member in a direction in which a gas flows out through the venting device.

The fixation member may include a binding part configured so that the moving member is caught not to be separated from the opening portion of the frame.

The binding part may include a venting flow path by opening the at least one area of the opening portion of the frame.

The moving member may include a first cover part positioned at a side outward from the binding part and configured to cover an outside of the opening portion, a second cover part positioned at a side inward from the binding part and configured to cover an inside of the opening portion, and a connection part configured to connect the first cover part and the second cover part.

The venting device may further include a sealing part provided between the first cover part and the binding part.

The moving member may be provided between the binding part and the second cover part and may include an elastic part configured to be pressed by a high-pressure gas generated in the frame and compressed by a compression force within a predetermined range.

The blocking member may include a mesh member forming a plurality of openings.

The protrusion part may be a plurality of pins placed on an inward side surface of the second cover part to penetrate the plurality of openings of the mesh member.

The plurality of pins may be formed to have a length at which the plurality of openings of the mesh member is not penetrated when the elastic part is compressed.

According to another aspect, there is provided a battery pack including the venting device according to the present disclosure.

According to still another aspect, there is provided a vehicle including the battery pack according to the present disclosure.

### Effects of the Invention

According to example embodiments, it is possible to prevent a venting device from being blocked. As a gas is discharged through an opening area of a blocking member, a protrusion part may prevent dust, a residual substance, and the like, which move along with the gas, from being accumulated near the blocking member. When the gas is discharged, the protrusion part of a moving member moves in a direction in which the gas is discharged. When the gas is not discharged, the protrusion part of the moving member which has moved as such may move back in the direction opposite to the direction in which the gas is discharged and remove the dust and the residual substance which are accumulated near the blocking member. Thus, the protrusion part may prevent accumulation of the dust and the residual substance by dusting the blocking member in a normal state in which the gas is not generated any more in a frame. Also, the protrusion part may operate so that a discharge of the gas is normally performed by dusting the blocking member in an abnormal state in which the gas is not discharged due to blocking of the blocking member.

According to such configuration of the present disclosure, the venting device may be continuously used. This is because the moving member is not separated from an opening portion of the frame as a binding part is provided, when the gas is discharged, and when the discharge of the gas is ended.

According to example embodiments, in a case in which a first cover part is mounted to the frame in any direction, as well as in a case in which the first cover part is mounted to the frame to be positioned above, the venting device may maintain sealing of an inner space of the frame when the gas is not discharged. This is because the venting device is not opened by a weight of the moving member alone as an elastic part is provided. Also, when the elastic part is decompressed after being compressed, the protrusion part may dust a blocking part with a stronger force due to elastic energy.

According to example embodiments, a gas discharge may be easier. When the moving member is pressed and moved by a high-pressure gas, a plurality of pins may become not penetrating a plurality of openings, so that an area in which the gas is discharged may widen.

### Brief Description of Drawings

FIG. 1 illustrates a battery pack including a venting device according to the present disclosure.
FIG. 2 is a diagram illustrating a cross section of a frame to which a venting device according to the present disclosure is mounted.
FIG. 3 is a diagram illustrating a shape of a venting device according to the present disclosure at a time at which a gas discharge is not performed.
FIG. 4 is a diagram illustrating a shape of a venting device according to the present disclosure at a time at which a gas discharge is performed.
FIG. 5 illustrates a venting device according to the present disclosure.
FIG. 6 is a diagram illustrating a fixation member included in a venting device according to the present disclosure.
FIG. 7 is a diagram illustrating a moving member included in a venting device according to the present disclosure.
FIG. 8 is a diagram illustrating a blocking member included in a venting device according to the present disclosure.
FIG. 9 is a diagram illustrating a shape of a blocking member and a protrusion part included in a venting device according to the present disclosure at a time at which a gas discharge is not performed.
FIG. 10 is a diagram illustrating a shape of a blocking member and a protrusion part included in a venting device according to the present disclosure at a time at which a gas discharge is performed.
FIG. 11 is an exploded perspective diagram illustrating a venting device according to the present disclosure.
FIG. 12 is a diagram illustrating a vehicle according to the present disclosure.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

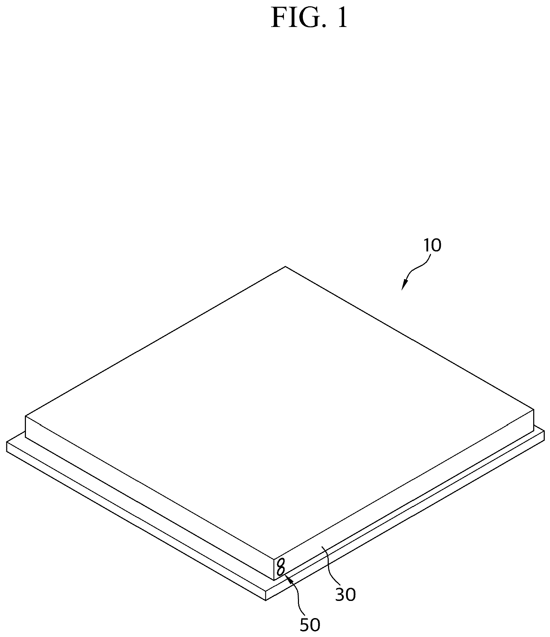

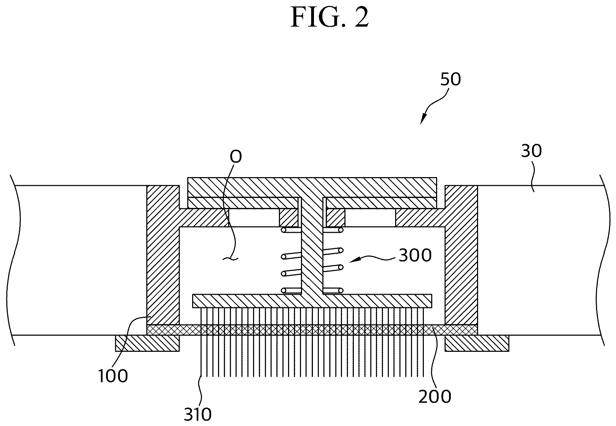

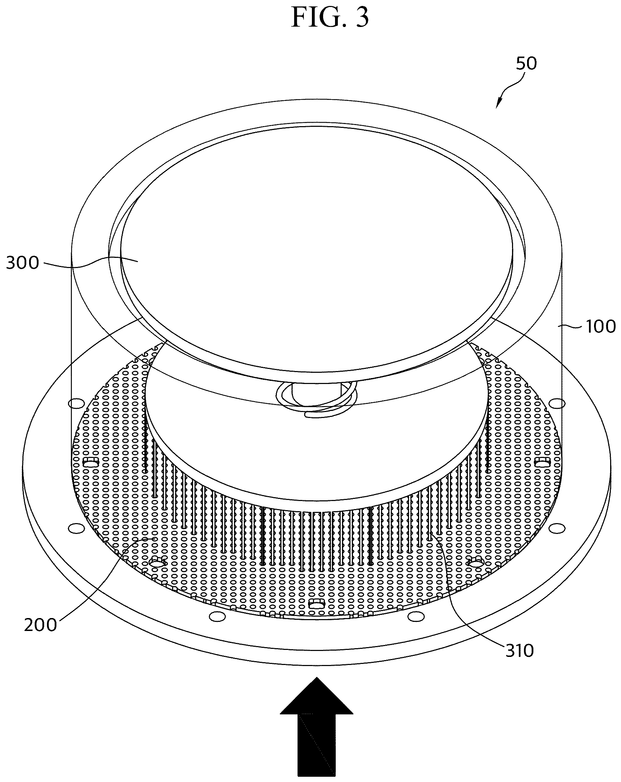

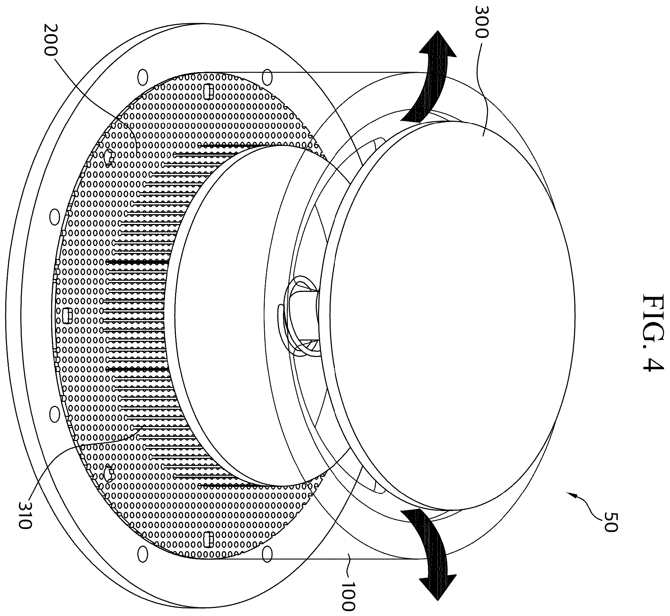

FIG. 1 illustrates a battery pack 10 including a venting device 50 according to the present disclosure. FIG. 2 is a diagram illustrating a cross section of a frame 30 to which the venting device 50 according to the present disclosure is mounted. FIG. 3 is a diagram illustrating a shape of the venting device 50 according to the present disclosure at a time at which a gas discharge is not performed. FIG. 4 is a diagram illustrating a shape of the venting device 50 according to the present disclosure at a time at which the gas discharge is performed.

Referring to FIGS. 1 through 4, the venting device 50 according to the present disclosure may be installed to the opening portion O of the frame 30 to which a battery cell is mounted.

The frame 30 may include the opening portion O having an approximately cylindrical shape for installing the venting device 50. An inner space of the frame 30 and an outer space of the frame 30 may communicate with each other through the opening portion O. The venting device 50 may be fitted into and installed in the opening portion O. The venting device 50 may be configured to discharge a gas generated in the battery cell.

The venting device 50 may be configured to tightly seal the inner space of the frame 30 when the gas is not discharged. The venting device 50 may be configured to allow the inner space of the frame 30 and the outer space of the frame 30 to communicate with each other when the gas is discharged.

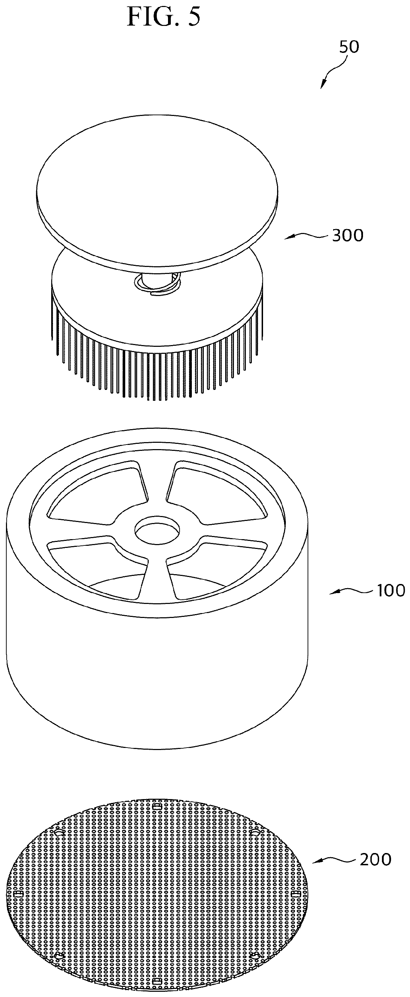

FIG. 5 illustrates the venting device 50 according to the present disclosure.

Referring to FIG. 5, the venting device 50 may include the fixation member 100, the moving member 300, and the blocking member 200.

The fixation member 100 may be installed to the opening portion O of the frame 30. The fixation member 100 may be fitted into the opening portion O of the frame 30 in a size approximately equal to that of the opening portion O of the frame 30. The fixation member 100 may have a hollow structure so that a gas moves into an inside thereof.

The fixation member 100 may have a cylindrical shape of which an inside is approximately hollow. An outer diameter of the fixation member 100 may be fitted into the opening portion O of the frame 30 in a size substantially equal to an inner diameter of the opening portion O of the frame 30 or without a gap in between.

The moving member 300 may open and close the opening portion O of the frame 30 by moving at least a portion of the moving member 300 within the fixation member 100. The moving member 300 may be pressed and moved by the gas. The moving member 300 may move in a direction in which the gas is discharged and in a direction opposite thereto. The moving member 300 may close the opening portion O of the frame 30 when the gas is not discharged. The moving member 300 may open the opening portion O of the frame 30 when the gas is discharged.

The blocking member 200 may be provided to the fixation member 100. The blocking member 200 may be provided below the fixation member 100. The blocking member 200 may block at least one area of the opening portion O of the frame 30. The blocking member 200 may include a blocking area that blocks the one area of the opening portion O of the frame 30 and an opening area other than the blocking area. Movement of the gas in the opening area of the blocking member 200 may be allowed, and movement of a flame therein may not be allowed. The blocking member 200 may be positioned at a side inward from the moving member 300 in a direction in which the gas flows out. The gas which passes through the opening area of the blocking member 200 may press the moving member 300 and move the moving member 300.

A protrusion part 310 may be provided to the moving member 300. The protrusion part 310 may selectively penetrate the opening area of the blocking member 200.

According to such configuration of the present disclosure, the venting device 50 may be prevented from being blocked. As the gas is discharged through the opening area of the blocking member 200, the protrusion part 310 may prevent dust, a residual substance, and the like, which move along with the gas, from being accumulated near the blocking member 200.

When the gas is discharged, the protrusion part 310 of the moving member 300 moves in the direction in which the gas is discharged. When a discharge of the gas ends, the protrusion part 310 of the moving member 300 which has moved as such may move back in the direction opposite to the direction in which the gas is discharged and remove the dust and the residual substance which are accumulated near the blocking member 200. When the discharge of the gas ends in a state in which the blocking member 200 is not blocked, the protrusion part 310 may prevent accumulation of the dust and the residual substance by dusting the blocking member 200. When the discharge of the gas ends in a state in which the blocking member 200 is blocked, the protrusion part 310 may remove the dust and the residual substance accumulated in the blocking member 200. In other words, the protrusion part 310 may prevent the dust and the residual substance from being accumulated in the blocking member 200, and although a gas discharge path is blocked as the dust and the residual substance are accumulated in the blocking member 200, the protrusion part 310 may facilitate the discharge of the gas by removing the dust and the residual substance which block the gas discharge path.

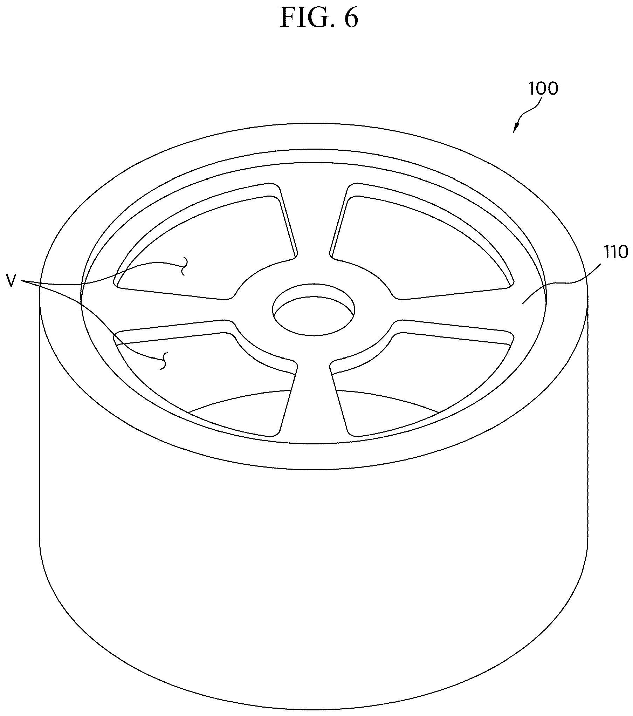

FIG. 6 is a diagram illustrating the fixation member 100 included in the venting device 50 according to the present disclosure.

Referring to FIG. 6, the fixation member 100 may include a binding part 110.

The binding part 110 may be configured so that the moving member 300 is caught thereon. The binding part 110 may be configured so that the moving member 300 is not separated from the opening portion O of the frame 30. The binding part 110 may be configured so that the moving member 300 is not separated from the opening portion O of the frame 30 by excessively moving in a direction in which a gas is discharged and in a direction opposite thereto.

The binding part 110 may include a venting flow path V by opening at least one area of the opening portion O of the frame 30. The binding part 110 may include the venting flow path V by perforating at least a portion of a remaining area other than an area on which the moving member 300 is caught.

According to such configuration of the present disclosure, the venting device 50 may be continuously used. This is because the moving member 300 is not separated from the opening portion O of the frame 30 as the binding part 110 is provided, when the gas is discharged, and when a discharge of the gas is ended.

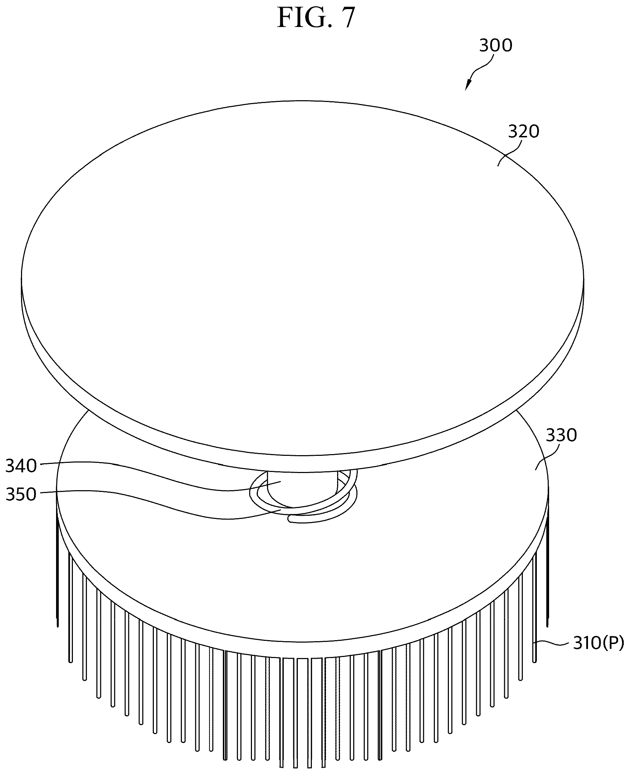

FIG. 7 is a diagram illustrating the moving member 300 included in the venting device 50 according to the present disclosure.

Referring to FIG. 7, the moving member 300 may include a first cover part 320, a second cover part 330, and a connection part 340. The moving member 300 may include an elastic part 350.

The first cover part 320 may be positioned outside the binding part 110. The first cover part 320 may cover an outside of the opening portion O. The first cover part 320 may be positioned at a side outward from the binding part 110 in a direction in which a gas is discharged. The first cover part 320 may be configured to block all venting flow paths V provided to the binding part 110.

The second cover part 330 may be positioned at a side inward from the binding part 110. The second cover part 330 may cover an inside of the opening portion O. The second cover part 330 may be positioned at a side inward from the binding part 110 in the direction in which the gas is discharged.

The connection part 340 may connect the first cover part 320 and the second cover part 330. The connection part 340 may be coupled to an approximate center of the first cover part 320 and an approximate center of the second cover part 330. The connection part 340 may pass through a hole provided to the binding part 110.

The protrusion part 310 may be required to move along the hole of the binding part 110 while not interfering with a blocking area of the blocking member 200. In other words, it may be desired that the moving member 300 is configured to accurately reciprocate without being tilted. To this end, an outer diameter of the connection part 340 may be formed to be substantially equal to an inner diameter of the hole of the binding part 110 or not to have a gap in between. In addition, a vertical length of an area in which an outer circumferential surface of the connection part 340 and an inner circumferential surface of the hole of the binding part 110 are in contact with each other may be formed to be sufficiently long. That is, a structure of the hole which corresponds to the connection part 340 and the binding part 110 may serve to guide accurate movement of the moving member 330. Through this, operational reliability of the venting device 50 may be secured.

The elastic part 350 may be provided between the binding part 110 and the second cover part 330. The elastic part 350 may be pressed by a high-pressure gas generated in the frame 30. The elastic part 350 may be compressed by a pressing force within a predetermined range. The elastic part 350 may be a spring. When the gas is discharged, the elastic part 350 may be caught on the binding part 110 and be compressed in the direction in which the gas is discharged. The elastic part 350 may have an elastic modulus greater than an elastic modulus at which the elastic part 350 starts to be compressed by a weight of the moving member 300. For example, when the venting device 50 is mounted to the frame 30 so that the first cover part 320 is positioned below, the elastic part 350 may be configured so that the moving member 300 does not open the opening portion O of the frame 30 by gravity.

According to such configuration of the present disclosure, in a case in which the first cover part 320 is mounted to the frame 30 in any direction, as well as in a case in which the first cover part 320 is mounted to the frame 30 to be positioned above, the venting device 50 may maintain sealing of an inner space of the frame when the gas is not discharged. This is because the venting device 50 is not opened by the weight of the moving member 300 alone as the elastic part 350 is provided.

Also, when the elastic part 350 is decompressed after being compressed, the protrusion part 310 may dust a blocking part with a stronger force due to elastic energy.

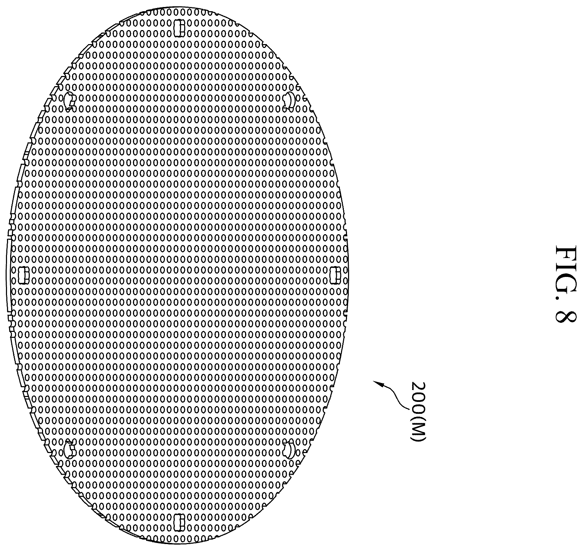

FIG. 8 is a diagram illustrating the blocking member 200 included in the venting device 50 according to the present disclosure.

Referring to FIG. 8, the blocking member 200 may include a mesh member M forming a plurality of openings. The plurality of openings may have sizes that allows movement of a gas exclusively, not movement of a flame. Fifteen to forty openings may be formed per area of 1 inch² of the blocking member.

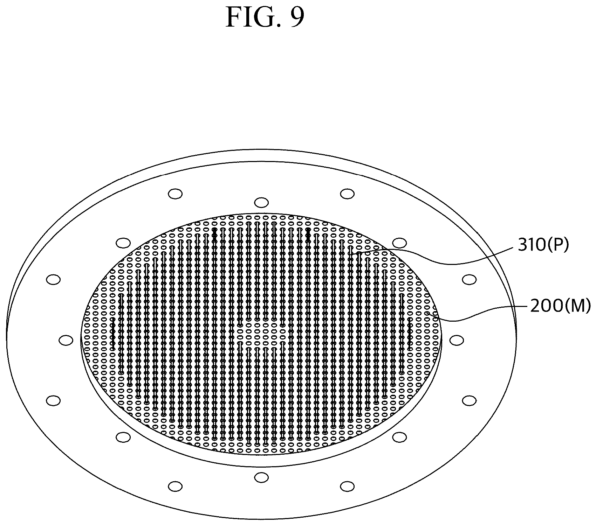

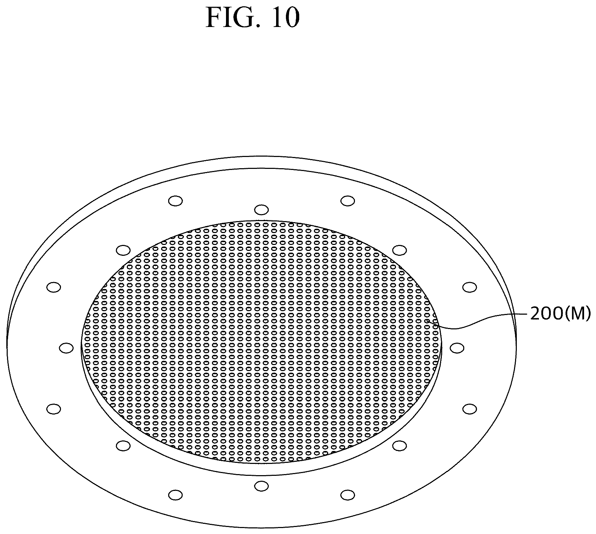

FIG. 9 is a diagram illustrating a shape of the blocking member 200 and the protrusion part 310 included in the venting device 50 according to the present disclosure at a time at which a gas discharge is not performed. FIG. 10 is a diagram illustrating a shape of the blocking member 200 and the protrusion part 310 included in the venting device 50 according to the present disclosure at a time at which the gas discharge is performed.

Referring to FIGS. 9 and 10, the protrusion part 310 may include a plurality of pins P. The plurality of pins P may penetrate a plurality of openings of the mesh member M. The plurality of pins may be placed on an inward side surface of the second cover part 330.

A length of the plurality of pins P which protrudes from the plurality of openings of the mesh member M may be shorter than a length of the elastic part 350.

The plurality of pins P may penetrate the plurality of openings of the mesh member M when a gas is not discharged. The plurality of openings of the mesh member M may become not penetrated when the gas is discharged.

The plurality of pins P may penetrate the plurality of openings of the mesh member M when the elastic part 350 is not compressed. The plurality of openings of the mesh member M may become not penetrated when the elastic part 350 is compressed.

When the elastic part 350 is not compressed, the plurality of openings may include a penetration area in which the plurality of pins P penetrates and a non-penetration area other than the penetration area. Since penetrated by the plurality pins P, the gas discharge may not be easy in the penetration area. Thus, the gas discharge may start through the non-penetration area. When the gas discharge starts, the gas may pass through the venting flow path V to press the first cover part 320. Through this, the plurality of pins P may become not penetrating, so that the gas may be discharged also through the penetration area. In other words, as both of the penetration area and the non-penetration area are included, the gas may be discharged through the non-penetration area even if an amount of the gas for allowing the plurality of pins P to not penetrate the plurality of openings completely is not generated.

According to such configuration of the present disclosure, the gas discharge may be easier. When the moving member 300 is pressed and moved by a high-pressure gas, the plurality of pins P may become not penetrating the plurality of openings, so that an area in which the gas is discharged may widen.

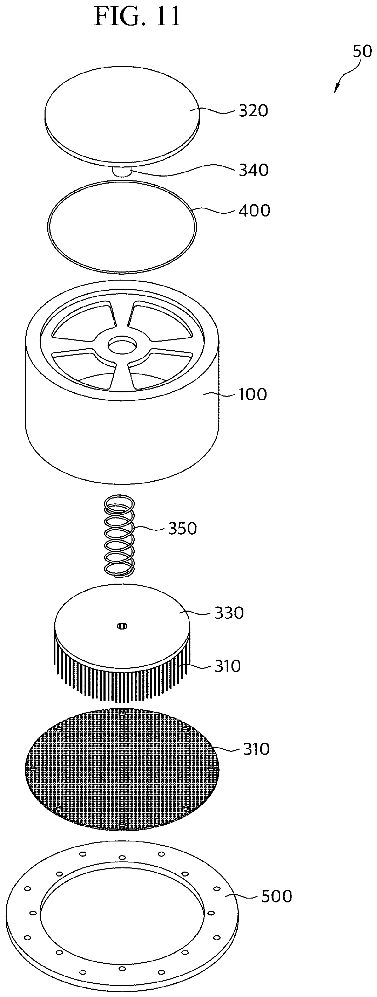

FIG. 11 is an exploded perspective diagram illustrating the venting device 50 according to the present disclosure.

Referring to FIG. 11, the venting device 50 according to the present disclosure may include a sealing part 400 and/or a connection member 500.

The sealing part 400 may be provided between the first cover part 320 and the binding part 110. The sealing part 400 may include a rubber material. The sealing part 400 may be an O-ring. A groove formed to receive the sealing part 400 may be formed to the first cover part 320 and the binding part 110.

According to such configuration of the present disclosure, when the gas does not escape, sealing by the venting device 50 may be improved.

The connection member 500 may connect the venting device 50 and the frame 30. The connection member 500 may have an approximate donut shape. The connection member 500 may include an inner connection part and an outer connection part. The inner connection part may be formed along an inner circumference of the connection member 500. The inner connection part may be coupled to the blocking member 200. The inner connection part may be coupled to the fixation member 100. The outer connection part may be formed along an outer circumference of the connection member 500. The outer connection part may be coupled to the frame 30.

According to such configuration of the present disclosure, the venting device 50 may be further stably fixed to the frame 30.

Referring back to FIG. 1, the battery pack 10 according to the present disclosure may include the venting device 50. Although not illustrated in the drawings, various elements in addition to a battery cell and the frame 30, such as an element of the battery pack 10 (e.g., a battery management system (BMS), a relay, a current sensor, or the like), which has been known to the public at a time point of application of the present disclosure, may be included in the battery pack 10 according to the present disclosure. A position of the venting device 50 or the number of venting devices 50 may be adjusted depending on venting performance required by the battery pack 10 and a position at which venting is required.

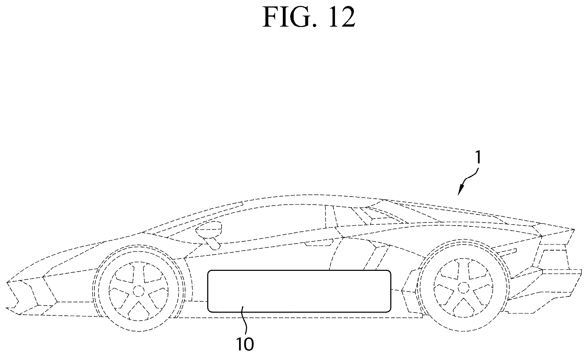

FIG. 12 is a diagram illustrating a vehicle 1 according to the present disclosure.

Referring to FIG. 12, the vehicle 1 according to the present disclosure may include the battery pack 10 according to an example embodiment of the present disclosure. The vehicle 1 may further include various elements included in the vehicle 1 in addition to the battery pack 10. For example, the vehicle 1 according to the present disclosure may further include a vehicle body, a motor, a control device such as an electronic control unit (ECU), or the like.

As described above, desired example embodiments of the present disclosure are mainly described with reference the accompanying drawings, but it is apparent to those skilled in the art that various modifications are allowed without deviating from the category of the present disclosure. Thus, the category of the present disclosure should be construed based on the claims described to include examples of such modifications.

### [Description of Reference Numerals]

1 Vehicle
10 Battery pack
30 Frame
O Opening portion
50 Venting device
100 Fixation member
110 Binding part
V Venting flow path
200 Blocking member
M Mesh member
300 Moving member
310 Protrusion part
P Plurality of pins
320 First cover part
330 Second cover part
340 Connection part
350 Elastic part
400 Sealing part
500 Connection member

## Claims

1. A venting device installed to an opening portion of a frame to which a battery cell is mounted, the venting device comprising:
a fixation member installed to the opening portion of the frame;
a moving member configured to open and close the opening portion of the frame by moving at least a portion of the moving member within the fixation member;
a blocking member provided to the fixation member and configured to block at least one area of the opening portion of the frame; and
a protrusion part provided to the moving member and configured to penetrate an opening area of the blocking member.

2. The venting device of claim 1, wherein the blocking member is positioned at a side inward from the moving member in a direction in which a gas flows out through the venting device.

3. The venting device of claim 1, wherein the fixation member comprises a binding part configured so that the moving member is caught not to be separated from the opening portion of the frame.

4. The venting device of claim 3, wherein the binding part comprises a venting flow path by opening the at least one area of the opening portion of the frame.

5. The venting device of claim 3, wherein the moving member comprises:
a first cover part positioned at a side outward from the binding part and configured to cover an outside of the opening portion;
a second cover part positioned at a side inward from the binding part and configured to cover an inside of the opening portion; and
a connection part configured to connect the first cover part and the second cover part.

6. The venting device of claim 5, further comprising a sealing part provided between the first cover part and the binding part.

7. The venting device of claim 5, wherein the moving member is provided between the binding part and the second cover part and comprises an elastic part configured to be pressed by a high-pressure gas generated in the frame and compressed by a compression force within a predetermined range.

8. The venting device of claim 7, wherein the blocking member comprises a mesh member forming a plurality of openings.

9. The venting device of claim 8, wherein the protrusion part is a plurality of pins placed on an inward side surface of the second cover part to penetrate the plurality of openings of the mesh member.

10. The venting device of claim 9, wherein the plurality of pins is formed to have a length at which the plurality of openings of the mesh member is not penetrated when the elastic part is compressed.

11. A battery pack comprising the venting device of any one of claims 1 to 10.

12. A vehicle comprising the battery pack of claim 11.
